(19) Europäisches Patentamt
European Patent Office
Office européen des brevets

(11) EP 4 773 305 A1

(12) **EUROPEAN PATENT APPLICATION**
published in accordance with Art. 153(4) EPC

(43) Date of publication:
**08.07.2026 Bulletin 2026/28**

(21) Application number: **25820273.8**

(22) Date of filing: **04.06.2025**

(51) International Patent Classification (IPC):
***H01M 10/0567*** (2010.01) ***H01M 10/42*** (2006.01)
***H01M 10/052*** (2010.01) ***H01M 4/525*** (2010.01)
***H01M 4/505*** (2010.01)

(52) Cooperative Patent Classification (CPC):
**H01M 10/0569; H01M 4/525; H01M 10/0525; H01M 10/0567; H01M 10/0568;** H01M 2300/0025; H01M 2300/0037; Y02E 60/10

(86) International application number:
**PCT/KR2025/007623**

(87) International publication number:
**WO 2025/254439 (11.12.2025 Gazette 2025/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.06.2024 KR 20240073345**

(71) Applicant: **LG Energy Solution, Ltd.**
**Seoul 07335 (KR)**

(72) Inventors:
- **KO, Jin Hyuck**
**Daejeon 34122 (KR)**
- **JI, Su Hyeon**
**Daejeon 34122 (KR)**
- **LEE, Chul Haeng**
**Daejeon 34122 (KR)**
- **LEE, Jung Min**
**Daejeon 34122 (KR)**
- **YEOM, Chul Eun**
**Daejeon 34122 (KR)**

(74) Representative: **Hoffmann Eitle**
**Patent- und Rechtsanwälte PartmbB**
**Arabellastraße 30**
**81925 München (DE)**

(54) **NON-AQUEOUS ELECTROLYTE AND LITHIUM SECONDARY BATTERY COMPRISING SAME**

(57) The present invention provides a non-aqueous electrolyte and a lithium secondary battery including the same. The non-aqueous electrolyte of the present invention includes a lithium salt, an organic solvent, and an additive. The additive includes a cyclic borate-based compound so as to prevent the decomposition of the non-aqueous electrolyte of the lithium secondary battery in a high-power environment that could lead to negative electrode degradation, or to further improve low-temperature high-rate discharging characteristics, high-temperature stability, overcharging prevention, and high-temperature battery expansion suppression effects.

[FIG. 1]

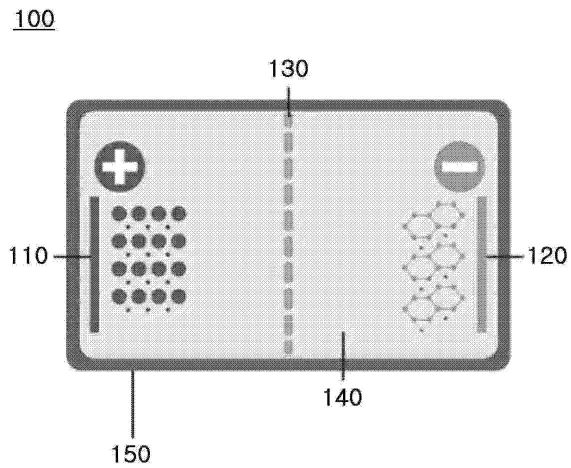


EP 4 773 305 A1

## Description

### TECHNICAL FIELD

Cross-reference to related applications

This application is based on and claims priority from Korean Patent Application No. 10-2024-0073345, filed on June 4, 2024, with the Korean Intellectual Property Office, the disclosure of which is incorporated herein in its entirety by reference.

Technical field

The present invention relates to a non-aqueous electrolyte and a lithium secondary battery including the same.

### BACKGROUND ART

As the application areas of lithium secondary batteries have rapidly expanded to power supply of electronic devices such as electricals, electronics, communications, and computers as well as power storage/supply for large-area devices such as automobiles and power storage devices in recent years, the demand for high-capacity, high-output and high-stability secondary batteries is increasing.

For example, as lithium secondary batteries evolve toward high-capacity and high-output, the likelihood of abnormal temperature rise during the charging/discharging process increases due to various reasons, which may lead to a so-called thermal runaway phenomenon in which embers explode at high temperatures. In the event of the thermal runaway, the fire is not easily extinguished, so safety issues are recognized as one of the more critical issues to be resolved in high-capacity and high-output lithium secondary batteries.

### DISCLOSURE OF THE INVENTION

### TECHNICAL PROBLEM

The present invention provides a non-aqueous electrolyte capable of improving the life performance and storage performance of a lithium secondary battery during operation at high temperatures and high voltages, and preventing an increase in resistance at a remarkable level.

Also, the present invention provides a lithium secondary battery including the non-aqueous electrolyte.

### TECHNICAL SOLUTION

The present invention provides a non-aqueous electrolyte including a lithium salt, an organic solvent, and an additive, in which the additive includes a compound represented by Formula 1 below.

[Formula 1]

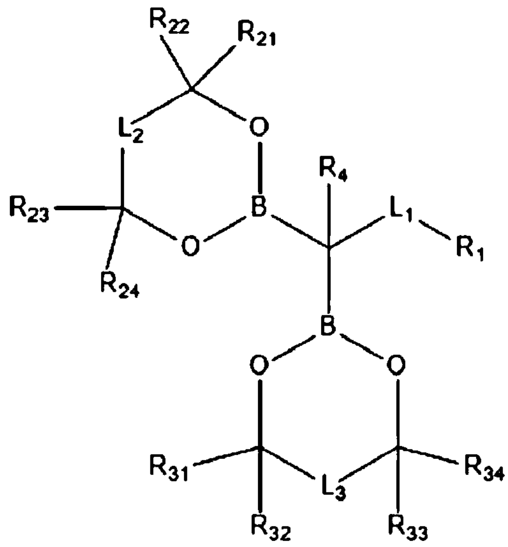

In Formula 1, $L_1$ is an alkylene group having 1 to 10 carbon atoms, $L_2$ is a direct bond or *-C($R_{25}$)($R_{26}$)-*, $L_3$ is a direct bond or *-C($R_{35}$)($R_{36}$)-*, $R_1$ is an unsaturated hydrocarbon group having 2 to 10 carbon atoms, $R_{21}$, $R_{22}$, $R_{23}$, $R_{24}$, $R_{25}$, $R_{26}$, $R_{31}$, $R_{32}$, $R_{33}$, $R_{34}$, $R_{35}$, $R_{36}$, and $R_4$ are each independently hydrogen or an alkyl group having 1 to 5 carbon atoms, and * is a bonding site.

Also, the present invention provides a lithium secondary battery including: a positive electrode; a negative electrode facing the positive electrode; a separator interposed between the positive electrode and the negative electrode; and the above-described non-aqueous electrolyte.

ADVANTAGEOUS EFFECTS

The non-aqueous electrolyte of the present invention is characterized in that it includes, as an additive, a cyclic borate-based compound (a compound represented by Formula 1) including two cyclic borate groups; and an unsaturated hydrocarbon group; in the structure. The cyclic borate group may form a SEI film having a high durability due to a high density (dense) while promoting lithium transport characteristics at the electrode surface, but reactivity degradation is problematic due to steric hindrance. The cyclic borate-based compound included in the non-aqueous electrolyte of the present invention includes the unsaturated hydrocarbon group, which facilitates the access of the cyclic borate group to the electrode, and improves reactivity. Thus, it is easier to form an SEI film derived from the above-described cyclic borate-based compound. Also, the cyclic borate-based compound contains two cyclic borate groups, which may provide a large amount of film components advantageous for improving durability, on the electrode surface. Also, the stabilization effect of lithium salts is excellent due to the presence of a large number of boron sites.

Accordingly, the lithium secondary battery including the non-aqueous electrolyte according to the present invention may exhibit improved life performance and storage performance, for example, improved life performance and storage performance at high temperatures and high voltage.

BRIEF DESCRIPTION OF THE DRAWING

The following drawings attached hereto illustrate example embodiments of the present invention and, together with the detailed description to be described later, serve to further understand the technical idea of the present invention. Therefore, the present invention should not be construed as being limited to the matters illustrated in the drawings.

FIG. 1 illustrates the structure of a lithium secondary battery according to one embodiment of the present invention.
FIG. 2 is a view illustrating a vehicle including a battery pack composed of the lithium secondary batteries of FIG. 1.

In some of the attached drawings, corresponding components are given the same reference numerals. Those skilled in the art would appreciate that the drawings depict elements simply and clearly and have not necessarily been drawn to scale. For example, in order to facilitate understanding of various embodiments, the dimensions of some elements illustrated in the drawings may be exaggerated compared to other elements. Additionally, elements of the known art that are useful or essential in commercially viable embodiments may often not be depicted so as not to interfere with the

spirit of the various embodiments of the present invention.

MODE FOR CARRYING OUT THE INVENTION

Words and terms used in the detailed description and the claims herein should not be interpreted to be limited to their usual or dictionary meanings, but should be interpreted to have meanings and concepts that correspond to the technical idea of the present invention in compliance with the principle that inventors may appropriately define terms and concepts for the purpose of best describing the present invention.

As used herein, it should be understood that the terms "comprise," "include," or "have," are intended to specify the presence of a feature, number, step, component, or combination thereof, but do not exclude in advance the possibility of the presence or addition of one or more other features, numbers, steps, components, or combinations thereof.

Meanwhile, before the present invention is explained, unless otherwise stated in the present invention, "* " means a connected portion (bonding site) between identical or different atoms or terminals of formulas.

In the description of "carbon number a to b" in the specification, "a" and "b" mean the number of carbon atoms included in a specific functional group. That is, the functional group may include "a" to "b" carbon atoms. For example, the "alkyl group of carbon numbers 1 to 5" may include an alkyl group having 1 to 5 carbon atoms, such as $CH_3$-, $CH_3CH_2$-, $CH_3CH_2CH_2$-, $(CH_3)_2CH$-, $CH_3CH_2CH_2CH_2$-, $(CH_3)_2CHCH_2$-, $CH_3CH_2CH_2CH_2CH_2$-, and $(CH_3)_2CHCH_2CH_2$-.

Also, in the present specification, each of an alkyl group, an alkenyl group, a silyl group, a siloxane group, and an aryl group may be substituted or unsubstituted. Unless otherwise defined, the above "substitution" means that at least one hydrogen bonded to carbon is substituted with an element other than hydrogen, e.g., an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a cycloalkynyl group having 3 to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, or a haloaryl group having 6 to 20 carbon atoms.

A lithium secondary battery is generally composed of a positive electrode including a positive electrode active material, a negative electrode including a negative electrode active material, a separator that separates the positive electrode from the negative electrode, and an electrolyte that serves as a medium for transferring lithium ions through the separator. According to one embodiment, as for the negative electrode active material, a carbon-based active material, a silicon-based active material, etc. may be used, and as for the positive electrode active material, lithium transition metal oxides such as a lithium cobalt oxide ($LiCoO_2$), a lithium nickel oxide ($LiNiO_2$) and a lithium nickel-cobalt-manganese composite transition metal oxide may be used.

Recently, in order to increase the energy density of the positive electrode of the lithium secondary battery, studies have been conducted on lithium nickel-cobalt-manganese composite transition metal oxides in which nickel is included in an amount of about 80 mol% or more relative to transition metals. However, when the nickel content of the lithium nickel-cobalt-manganese composite transition metal oxide is increased, there is a problem in that the thermal stability of the positive electrode is reduced.

In order to prevent such a problem, when the nickel content in the lithium nickel-cobalt-manganese composite transition metal oxide is lowered, the operating voltage needs to be increased to achieve the required energy density. During such high-voltage operation, problems such as electrolyte side reactions at the positive electrode, reduced high-temperature durability, and/or increased resistance may be deepened.

In consideration of these points, the present invention provides a non-aqueous electrolyte that may improve the life performance and storage performance of a lithium secondary battery during operation at high temperatures and high voltages, and may suppress or prevent an increase in resistance at a remarkable level.

Hereinafter, the present invention will be described in more detail.

Referring to FIG. 1, a lithium secondary battery 100 according to one embodiment of the present invention includes an electrode assembly, a non-aqueous electrolyte 140, and a battery housing 150. The electrode assembly is composed of a positive electrode 110, a negative electrode 120 facing the positive electrode 110, and a separator 130 interposed between the positive electrode 110 and the negative electrode 120. The battery housing 150 accommodates the electrode assembly and the non-aqueous electrolyte 140.

The lithium secondary battery 100 may be manufactured by storing the electrode assembly in the battery housing 150, and then injecting the above-described non-aqueous electrolyte 140.

The lithium secondary battery 100 according to one embodiment of the present invention may be manufactured as, for example, a prismatic type, a pouch type, a coin type or a cylindrical type depending on the manufacturing form.

**Non-aqueous electrolyte**

The non-aqueous electrolyte 140 according to one embodiment of the present invention includes a lithium salt, an organic solvent, and an additive. The additive includes a compound represented by Formula 1 below.

[Formula 1]

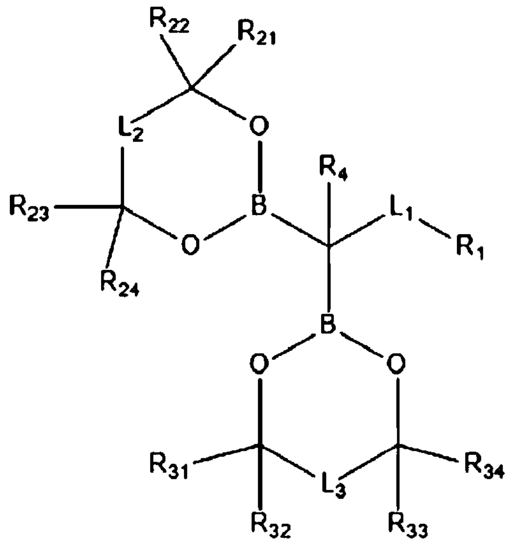

In Formula 1, $L_1$ is an alkylene group having 1 to 10 carbon atoms, $L_2$ is a direct bond or *-C($R_{25}$)($R_{26}$)-*, $L_3$ is a direct bond or *-C($R_{35}$)($R_{36}$)-*, $R_1$ is an unsaturated hydrocarbon group having 2 to 10 carbon atoms, $R_{21}$, $R_{22}$, $R_{23}$, $R_{24}$, $R_{25}$, $R_{26}$, $R_{31}$, $R_{32}$, $R_{33}$, $R_{34}$, $R_{35}$, $R_{36}$, and $R_4$ are each independently hydrogen or an alkyl group having 1 to 5 carbon atoms, and * is a bonding site.

(1) Lithium salt

As for the lithium salt to be used in the present invention, various lithium salts generally used for the non-aqueous electrolyte 140 for the lithium secondary battery 100 may be used without limitation. For example, the lithium salt may contain $Li^+$ as a cation, and may contain, as an anion, at least one selected from $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$ and $(CF_3CF_2SO_2)_2N^-$.

For example, the lithium salt may include at least one type selected from LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiFSI ($LiN(SO_2F)_2$), $LiCH_3SO_3$, $LiCF_3CO_2$, $LiCH_3CO_2$ and LiBETI ($LiN(SO_2CF_2CF_3)_2$). According to one embodiment, the lithium salt may include at least one type selected from $LiBF_4$, $LiClO_4$, $LiPF_6$, LiBOB ($LiB(C_2O_4)_2$), $LiCF_3SO_3$, LiTFSI ($LiN(SO_2CF_3)_2$), LiFSI (($LiN(SO_2F)_2$) and LiBETI ($LiN(SO_2CF_2CF_3)_2$).

The lithium salt may be included in the non-aqueous electrolyte at a concentration of about 0.5 M to 5 M, for example, a concentration of about 0.8 M to 4 M, or a concentration of 0.8 M to 2.0 M. When the concentration of the lithium salt satisfies the above range, the lithium ion yield ($Li^+$ transference number) and the degree of dissociation of lithium ions may be improved, thereby improving the output characteristics of the battery.

(2) Organic solvent

The organic solvent is a non-aqueous solvent generally used for the lithium secondary battery 100, and is not particularly limited as long as decomposition caused by oxidation reactions, and the like, may be minimized during the charging/discharging of the secondary battery.

For example, the organic solvent may include at least one type selected from a cyclic carbonate-based organic solvent, a linear carbonate-based organic solvent, a linear ester-based organic solvent, and a cyclic ester-based organic solvent.

According to one embodiment, the organic solvent may include a cyclic carbonate-based organic solvent, a linear carbonate-based organic solvent or a mixture thereof.

The cyclic carbonate-based organic solvent is a high-viscosity organic solvent. This organic solvent allows the lithium salt to be dissociated well in the electrolyte due to its high dielectric constant, and may include, for example, at least one type of organic solvent selected from ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate and vinylene carbonate. According to one embodiment, the organic solvent may include at least one type selected from ethylene carbonate (EC) and fluoroethylene carbonate (FEC).

The linear carbonate-based organic solvent is an organic solvent having a low viscosity and a low dielectric constant, and may include, for example, at least one type selected from dimethyl carbonate (DMC), diethyl carbonate (DEC), dipropyl carbonate, ethylmethyl carbonate (EMC), methylpropyl carbonate and ethylpropyl carbonate. According to one embodiment, the organic solvent may include at least one type selected from ethylmethyl carbonate (EMC) and diethyl carbonate (DEC).

The organic solvent may be a mixture of the cyclic carbonate-based organic solvent and the linear carbonate-based organic solvent. The cyclic carbonate-based organic solvent and the linear carbonate-based organic solvent may be mixed at a volume ratio of about 5:95 to 40:60, for example, a volume ratio of 7:93 to 25:75. When the mixing ratio of the cyclic carbonate-based organic solvent and the linear carbonate-based organic solvent satisfies the above range, it is possible to satisfy both characteristics, i.e., a high dielectric constant and a low viscosity, and to exhibit excellent ion conductivity characteristics.

In order to produce an electrolyte having a high ion conductivity, the organic solvent may additionally include at least one type of ester-based organic solvent selected from the linear ester-based organic solvent and the cyclic ester-based organic solvent together with at least one type of carbonate-based organic solvent selected from the cyclic carbonate-based organic solvent and the linear carbonate-based organic solvent.

The linear ester-based organic solvent may include, for example, at least one type selected from methyl acetate, ethyl acetate, propyl acetate, methyl propionate, ethyl propionate, propyl propionate, and butyl propionate.

Also, the cyclic ester-based organic solvent may include, for example, at least one type selected from γ-butyrolactone, γ-valerolactone, γ-caprolactone, σ-valerolactone and ε-caprolactone.

As for the organic solvent, as necessary, an organic solvent generally used for the non-aqueous electrolyte may be added and used without limitation. For example, among an ether-based organic solvent, a glyme-based solvent and a nitrile-based organic solvent, at least one organic solvent may also be additionally included.

As for the ether-based solvent, any one selected from dimethyl ether, diethyl ether, dipropyl ether, methyl ethyl ether, methyl propyl ether, ethyl propyl ether, 1,3-dioxolane (DOL) and 2,2-bis(trifluoromethyl)-1,3-dioxolane (TFDOL) or a mixture of two or more types of these may be used, but the present invention is not limited thereto.

The glyme-based solvent is a solvent that has a high dielectric constant, a low surface tension, and a low reactivity with metals compared to the linear carbonate-based organic solvent, and may include at least one selected from dimethoxyethane (glyme, DME), diethoxyethane, diglyme, triglyme, and tetra-glyme (TEGDME), but the present invention is not limited thereto.

The nitrile-based solvent may be at least one type selected from acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

(3) Additive

The non-aqueous electrolyte 140 further includes an additive together with the above-described lithium salt and organic solvent.

As for the additive, for example, an additive capable of forming an SEI (Solid Electrolyte Interphase) film may be additionally included in the non-aqueous electrolyte 140 when necessary in order to prevent or suppress the decomposition of the non-aqueous electrolyte of the lithium secondary battery in a high-power environment that could lead to negative electrode degradation, or to further improve low-temperature high-rate discharging characteristics, high-temperature stability, overcharging prevention, and high-temperature battery expansion suppression effects.

The additive includes a compound represented by Formula 1 below.

[Formula 1]

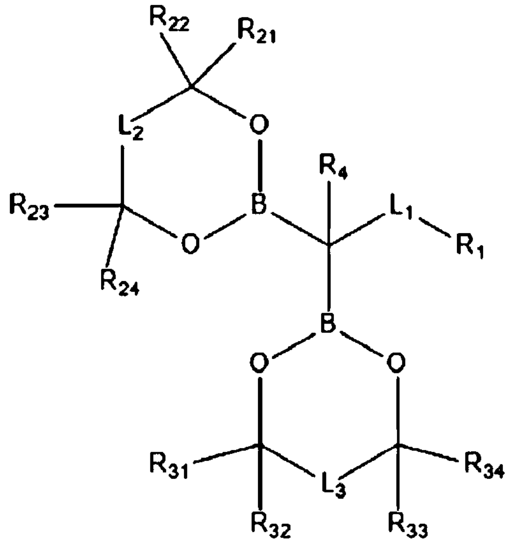

In Formula 1, $L_1$ is an alkylene group having 1 to 10 carbon atoms, $L_2$ is a direct bond or *-C($R_{25}$)($R_{26}$)-*, $L_3$ is a direct bond or *-C($R_{35}$)($R_{36}$)-*, $R_1$ is an unsaturated hydrocarbon group having 2 to 10 carbon atoms, $R_{21}$, $R_{22}$, $R_{23}$, $R_{24}$, $R_{25}$, $R_{26}$, $R_{31}$, $R_{32}$, $R_{33}$, $R_{34}$, $R_{35}$, $R_{36}$, and $R_4$ are each independently hydrogen or an alkyl group having 1 to 5 carbon atoms, and * is a bonding site.

In general, in the case of cyclic borate, it is possible to form a SEI film having a high durability due to a high density (dense) while promoting lithium transport characteristics at the electrode (the positive electrode and/or the negative electrode). However, after being solvated with the organic solvent, the cyclic borate is too bulky and has difficulty in accessing the negative electrode. Then, this reduced accessibility becomes a factor of reduced reactivity. In this regard, the compound represented by Formula 1 according to the present invention contains an unsaturated hydrocarbon group in the structure. This unsaturated hydrocarbon group is highly reactive and has easy access to the electrode due to its LUMO (lowest unoccupied molecular orbital) characteristics. Thus, the cyclic borate group present together with the unsaturated hydrocarbon group also has easy access to the electrode. This may promote the reactivity of the cyclic borate at the electrode. This effect cannot be realized from substituents (e.g., an alkyl group, etc.) other than the unsaturated hydrocarbon group such as an allyl group or a propargyl group.

Also, the cyclic borate-based compound includes two cyclic borate groups, which may provide a large amount of film components advantageous for improving durability, on the electrode surface. Also, the stabilization effect of lithium salts is excellent due to the presence of a large number of boron sites. For example, when only one cyclic borate group exists within the compound, the effect on improving the durability of the SEI film is minimal, and the effect on improving the life performance of lithium secondary batteries under high voltage and high temperature conditions is insufficient. On the other hand, when three or more cyclic borate groups exist within the compound, excessive steric hindrance leads to reduced reactivity, making it difficult to protect the electrode through the SEI film.

In the above Formula 1, $R_1$ may be an unsaturated hydrocarbon group having 2 to 10 carbon atoms. Here, the unsaturated hydrocarbon group may refer to a hydrocarbon group containing a carbon-carbon double bond or a hydrocarbon group containing a carbon-carbon triple bond. $R_1$ may be a substituent selected from the following Formula 1-a and Formula 1-b. Specifically, $R_1$ may be a substituent represented by the following Formula 1-a.

[Formula 1-a]

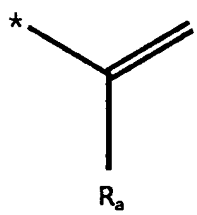

[Formula 1-b]

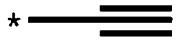

In the above Formula 1-a, $R_a$ may be hydrogen or an alkyl group having 1 to 5 carbon atoms. The * means a bonding site.

In Formula 1, $L_1$ may be an alkylene group having 1 to 10 carbon atoms, for example, an alkylene group having 1 to 5 carbon atoms, a methylene group, or an ethylene group in terms of properly realizing the reactivity improving effect of the cyclic borate group through the unsaturated hydrocarbon group, or may be a methylene group according to one embodiment.

In Formula 1, $R_{21}$, $R_{22}$, $R_{23}$, $R_{24}$, $R_{31}$, $R_{32}$, $R_{33}$, $R_{34}$ and $R_4$ may be each independently hydrogen or an alkyl group having 1 to 5 carbon atoms, may be each independently, for example, hydrogen or an alkyl group having 1 to 3 carbon atoms, may be each independently hydrogen or a methyl group, or may be each hydrogen. Within the above range according to one embodiment, a stable SEI film formation reaction is possible without reducing the reactivity of the cyclic borate group and the unsaturated hydrocarbon group.

$L_2$ may be a direct bond or *-C($R_{25}$)($R_{26}$)-*, and $L_3$ may be a direct bond or *-C($R_{35}$)($R_{36}$)-*. Here, in *-C($R_{25}$)($R_{26}$)-* and *-C($R_{35}$)($R_{36}$)-*, C means a carbon element. Also, * means a bonding site. For example, $L_2$ and $L_3$ may be each a direct bond. Also, when each of $L_2$ and $L_3$ is *-C($R_{25}$)($R_{26}$)-* or *-C($R_{35}$)($R_{36}$)-*, $R_{25}$, $R_{26}$, $R_{35}$ and $R_{36}$ may be each independently hydrogen or an alkyl group having 1 to 5 carbon atoms, may be each independently hydrogen or an alkyl group having 1 to 3 carbon atoms, or may be each independently hydrogen or a methyl group. Within the above range, a stable SEI film formation reaction is possible without reducing the reactivity of the cyclic borate group and the unsaturated hydrocarbon group.

The compound represented by Formula 1 may include at least one type selected from compounds represented by Formulas 1-1 to 1-8 below, may include, for example, at least one type selected from the compounds represented by Formulas 1-1 to 1-4 below, or may include at least one type selected from the compounds represented by Formulas 1-1 and 1-3 below.

[Formula 1-1]

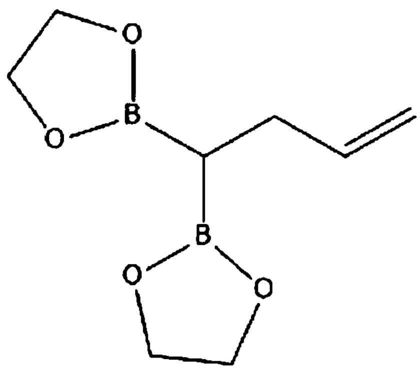

[Formula 1-2]

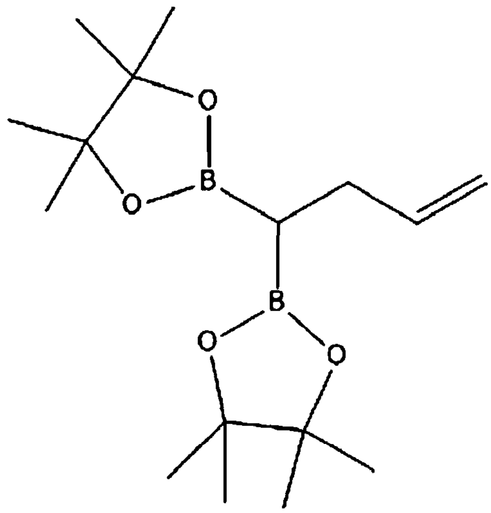

[Formula 1-3]

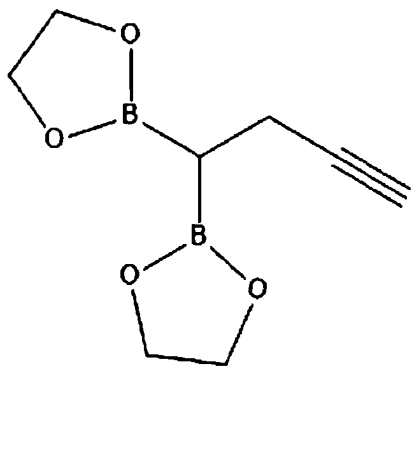

[Formula 1-4]

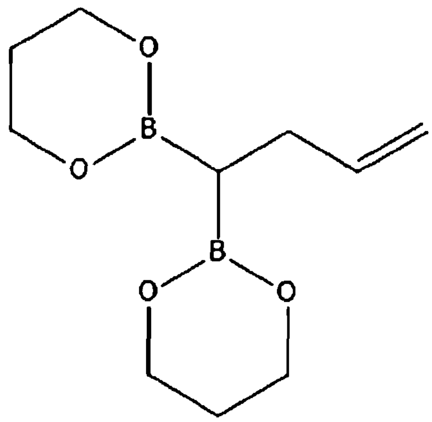

[Formula 1-5]

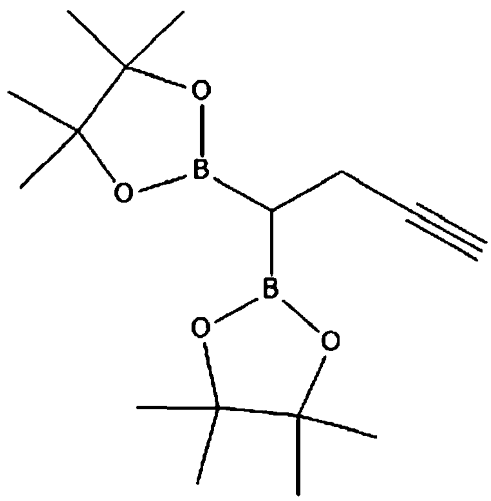

[Formula 1-6]

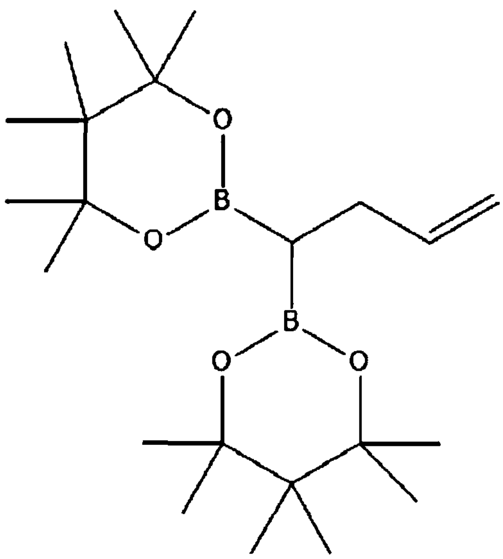

[Formula 1-7]

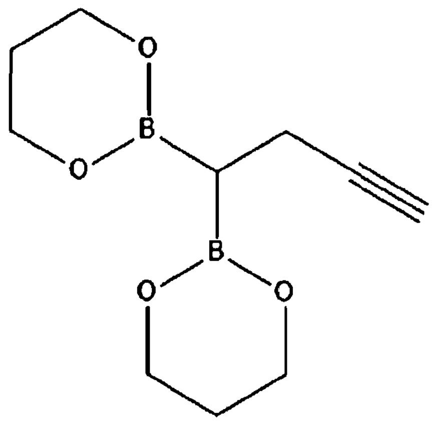

[Formula 1-8]

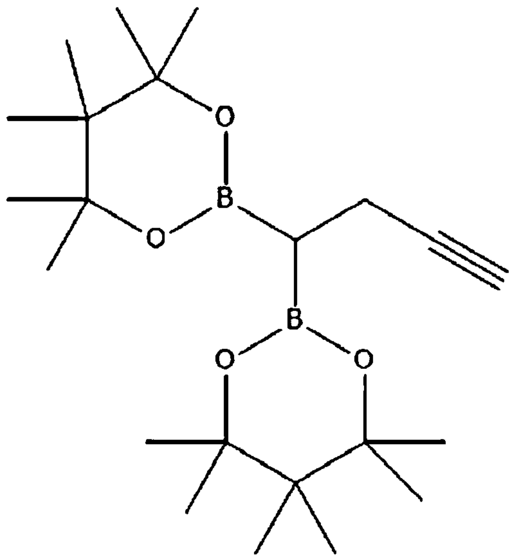

The compound represented by Formula 1 may be included in an amount of about 0.01 wt% to 10 wt%, for example, about 0.05 wt% to 5 wt%, about 0.1 wt% to 3 wt%, about 0.3 wt% to 1.5 wt%, or about 0.5 wt% to 1 wt% relative to the weight of the non-aqueous electrolyte 140, or may be included in an amount of 0.5 wt% to 0.8 wt% according to one embodiment. When the compound represented by Formula 1 is used within the above-described content range, it is possible to form a flexible SEI film with an excellent durability at the negative electrode while suppressing or preventing an increase in resistance.

The additive may further include an additional additive together with the compound represented by Formula 1. The additional additive may be included in the non-aqueous electrolyte 140 in order to suppress or prevent the decomposition of the non-aqueous electrolyte in a high-power environment that could lead to negative electrode degradation, or to obtain low-temperature high-rate discharging characteristics, high-temperature stability, overcharging prevention, and high-temperature battery expansion suppression effects. When the additional additive is included, the compound represented by Formula 1 may be denoted by a first additive, and the additional additive may be denoted by a second additive.

For example, the additional additive may be at least one type selected from lithium difluorophosphate (LiDFP), vinylene carbonate, vinyl ethylene carbonate, fluoroethylene carbonate, propane sultone, propene sultone, succinonitrile, adiponitrile, ethylene sulfate, lithium bis-(oxalate)borate (LiBOB), 3-trimethoxysilanyl-propyl-N-aniline (TMSPa), and tris(trimethylsilyl) phosphite (TMSPi), a compound represented by Formula 2 below and a compound represented by Formula 3 below.

[Formula 2]

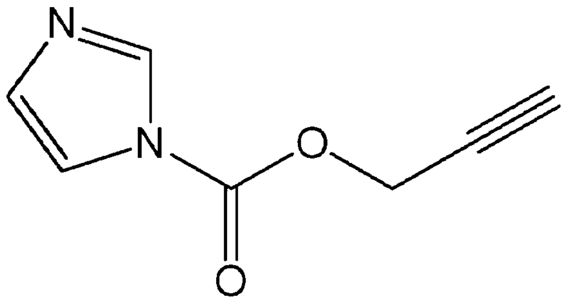

[Formula 3]

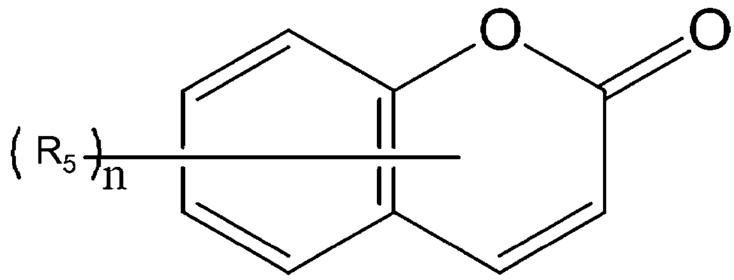

In Formula 3, $R_5$ includes halogen, a nitrile group, a propargyl group, an ester group, an ether group, a ketone group, a carboxy group, an alkyl group, an alkenyl group, a substituted or unsubstituted alkynyl group, an alkoxy group, a boron group, a borate group, an isocyanate group, an isothiocyanate group, a silyl group, a siloxane group, a sulfone group, a sulfonate group, a sulfate group or a combination of two or more thereof. n is an integer selected from 0 to 6.

The compound represented by Formula 3 may be at least one type selected from, for example, compounds represented by Formulas 3-1 to 3-9 below.

[Formula 3-1]

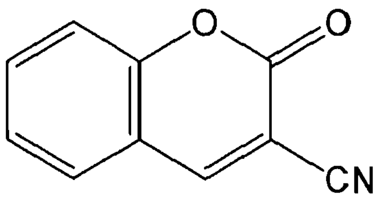

[Formula 3-2]

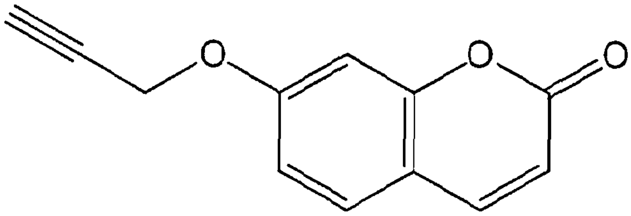

[Formula 3-3]

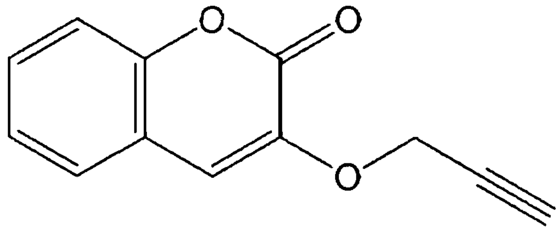

[Formula 3-4]

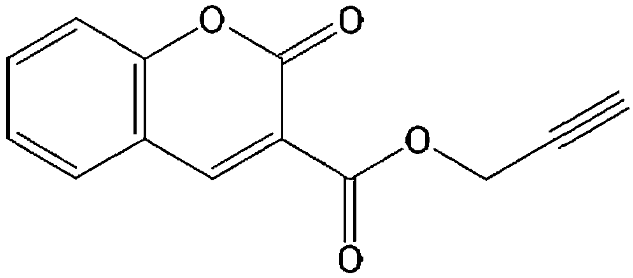

[Formula 3-5]

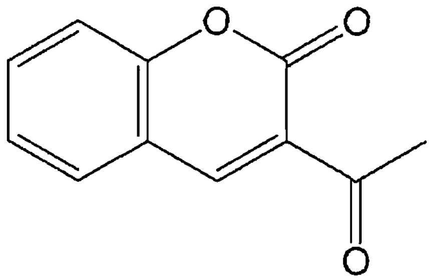

[Formula 3-6]

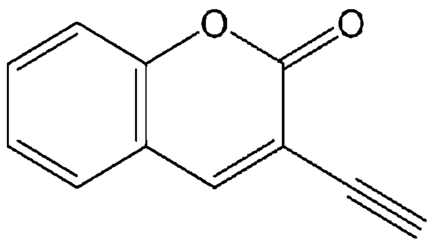

[Formula 3-7]

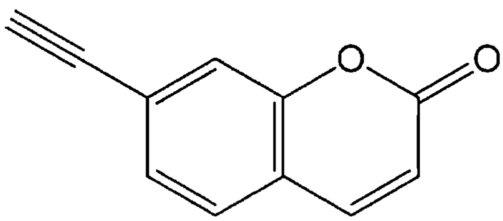

[Formula 3-8]

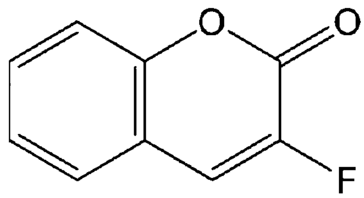

[Formula 3-9]

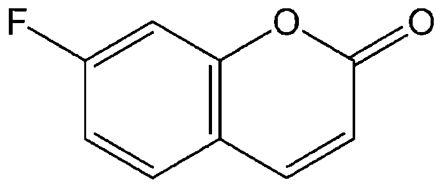

The additional additive may be included in an amount of about 0.1 wt% to 15 wt%, e.g., about 0.3 wt% to 3 wt%, in the non-aqueous electrolyte.

**Lithium secondary battery**

According to one embodiment, the present invention provides the lithium secondary battery 100 including the above-described non-aqueous electrolyte 140.

The lithium secondary battery 100 according to the present invention includes: the positive electrode 110; the negative electrode 120 facing the positive electrode 110; the separator 130 interposed between the positive electrode 110 and the negative electrode 120; and the above-described non-aqueous electrolyte 140.

According to one embodiment, the lithium secondary battery 100 may be manufactured by storing an electrode assembly in the battery housing 150, and then injecting the above-described non-aqueous electrolyte 140. The electrode assembly includes the positive electrode 110; the negative electrode 120 facing the positive electrode 110; and the separator 130 interposed between the positive electrode 110 and the negative electrode 120. Here, as described above, the lithium secondary battery 100 according to one embodiment of the present invention may be manufactured as, for example, a prismatic type, a pouch type, a coin type, or a cylindrical type depending on the manufacturing form.

Following the above-described non-aqueous electrolyte, hereinafter, the negative electrode, the positive electrode and the separator will be described.

**(1) Positive electrode**

The positive electrode 110 may include a positive electrode active material.

The positive electrode active material is a compound that allows reversible intercalation and deintercalation, and is not particularly limited as long as it is a positive electrode active material used in the relevant field. Examples of the positive electrode active material may include: layered compounds such as lithium cobalt oxide ($LiCoO_2$) and lithium nickel oxide ($LiNiO_2$) or compounds substituted with one or more transition metals; lithium iron oxides such as $LiFe_3O_4$; lithium iron phosphates such as $LiFePO_4$; lithium manganese oxides such as formulas $Li_{1+c1}Mn_{2-c1}O_4$ ($0 \leq c1 \leq 0.33$), $LiMnO_3$, $LiMn_2O_3$, and $LiMnO_2$; lithium copper oxide ($Li_2CuO_2$); vanadium oxides such as $LiV_3O_8$, $V_2O_5$, and $Cu_2V_2O_7$; Ni-site type lithium nickel oxides represented by the formula $LiNi_{1-c2}M_{c2}O_2$ (where M is at least one selected from Co, Mn, Al, Cu, Fe, Mg, B and Ga, and satisfies about $0.01 \leq c2 \leq 0.3$); and lithium manganese composite oxides represented by the formula $LiMn_{2-c3}M_{c3}O_2$ (where M is at least one selected from Co, Ni, Fe, Cr, Zn and Ta, and satisfies about $0.01 \leq c3 \leq 0.1$) or $Li_2Mn_3MO_8$ (where M is at least one selected from Fe, Co, Ni, Cu and Zn.), but are not limited thereto. The positive electrode may also be a Li-metal positive electrode.

According to one embodiment, the positive electrode active material may include at least one type selected from lithium cobalt oxide ($LiCoO_2$), lithium nickel cobalt manganese oxide, excess-lithium manganese-rich oxide and lithium iron phosphate.

The lithium nickel cobalt manganese oxide having a high content of nickel may be represented by Formula A below. The positive electrode active material may include a lithium transition metal oxide represented by the following Formula A.

[Formula A] $Li_{1+x}(Ni_aCo_bMn_cM_d)O_2$

In Formula A, M is at least one type selected from W, Cu, Fe, V, Cr, Ti, Zr, Zn, Al, In, Ta, Y, La, Sr, Ga, Sc, Gd, Sm, Ca, Ce, Nb, Mg, B and Mo. 1+x, a, b, c and d are atomic fractions of independent elements, respectively, x satisfies about $0 \le x \le 0.2$, a satisfies about $0<a<1$, b satisfies about $0<b<1$, c satisfies about $0<c<1$, d satisfies about $0 \le d \le 0.1$, and $a+b+c+d=1$.

According to one embodiment, in Formula A, x may satisfy about $0 \le x \le 0.5$, for example, about $0 \le x \le 0.2$.

In Formula A, a may satisfy about $0.5 \le a \le 0.7$, for example, about $0.55 \le a \le 0.65$.

In Formula A, b may satisfy about $0<b \le 0.15$. b corresponds to the molar percentage of Co among metals except for lithium, in the lithium transition metal oxide represented by Formula A. According to the present invention, by lowering the Co content, it is possible to obtain a cost advantage and to relatively increase the ratio of Mn, so that the structural stability of the positive electrode active material may be improved. For example, in Formula A, b may satisfy about $0<b \le 0.1$.

In Formula A, b/a may satisfy about $0<b/a \le 0.2$. Within the corresponding range, the ratio of Co in the transition metals is appropriately adjusted, and then the increase in irreversibility within the structure is not large. Thus, it is easy to exhibit an effect of improving performance by forming a positive electrode film through an additive. According to one embodiment, in Formula A, b/a may satisfy about $0.05 \le b/a \le 0.2$.

In Formula A, $c=1-a-b-d$, and a/c satisfies about $1 \le a/c \le 3$. c corresponds to the molar percentage of Mn among metals except for lithium, in the lithium transition metal oxide represented by Formula A. According to the present invention, since the molar ratio of Ni to Mn is adjusted to satisfy $1 \le a/c \le 3$, it is possible to improve the structural stability of the positive electrode active material. According to one embodiment, a/c may satisfy about $1.5 \le a/c \le 2.5$.

In Formula A, M may be understood as a doping element for the lithium transition metal oxide, and may be at least one type selected from, for example, W, Cu, Fe, V, Cr, Ti, Zr, Zn, Al, In, Ta, Y, La, Sr, Ga, Sc, Gd, Sm, Ca, Ce, Nb, Mg, B, and Mo. Here, d may satisfy $0 \le d \le 0.1$, for example, $0 \le d \le 0.05$.

In Formula A, $a/(b \times c)$ may be about 18 to 50, for example, about 18 to 40, or about 20 to 35. Within the above range, the contents of nickel, cobalt and manganese within Formula A are harmoniously adjusted. Thus, it is possible to improve an effect of improving performance by forming a positive electrode film through an additive while improving the structural stability of the positive electrode active material.

The excess-lithium manganese-rich oxide may include a compound represented by Formula B below.

[Formula B] $Li_{1+s}[Ni_tCo_uMn_vM^1{}_w]O_{2+z}$

In Formula B, $M^1$ is at least one type selected from W, Cu, Fe, V, Cr, Ti, Zr, Zn, Al, In, Ta, Y, La, Sr, Ga, Sc, Gd, Sm, Ca, Ce, Nb, Mg, B and Mo, s satisfies about $0.05 \le s \le 1$, t satisfies about $0 \le t \le 0.5$, u satisfies about $0 \le u \le 0.3$, v satisfies about $0.5 \le v<1.0$, w satisfies about $0 \le w \le 0.2$, and $0 \le z \le 1$. For example, in Formula B, s may satisfy about $0.05 \le s \le 1.0$, t may satisfy about $0.1 \le t \le 0.5$, u may satisfy about $0 \le u \le 0.1$, v may satisfy about $0.5 \le v<1.0$, $0 \le w \le 0.2$, and $0 \le z \le 1$. Alternatively, in Formula B, $0.10 \le s \le 0.50$, t may satisfy about $0.1 \le t \le 0.5$, u may satisfy about $0 \le u \le 0.1$, v may satisfy about $0.6 \le v<1.0$, w may satisfy about $0 \le w \le 0.1$, and z may satisfy about $0 \le z \le 0.50$.

The lithium iron phosphate may include a compound represented by Formula C below.

[Formula C] $Li_{1+e}Fe_{1-g}M^2{}_g(PO_{4-f})X_f$

In Formula C, $M^2$ is at least one element selected from Co, Ni, Mn, Al, Mg, Ti and V, X is F, S, or N, g satisfies about $0 \le g \le 0.5$; e satisfies about $-0.5 \le e \le +0.5$; and f satisfies about $0 \le f \le 0.1$. Formula C may be represented by, for example, $LiFePO_4$ (g=0, e=0, and f=0).

The positive electrode 110 may include a positive electrode current collector and a positive electrode active material layer disposed on at least one surface of the positive electrode current collector.

The positive electrode current collector is not particularly limited as long as it has high conductivity without causing a chemical change in the battery. For example, the positive electrode current collector may include at least one type selected from copper, stainless steel, aluminum, nickel, titanium, calcined carbon, and an aluminum-cadmium alloy, for example, aluminum.

The positive electrode current collector may generally have a thickness of about 3 μm to 500 μm.

In the positive electrode current collector, by forming fine irregularities on the surface, it is also possible to enhance the bonding strength of the positive electrode active material. For example, the positive electrode current collector may be used in various forms such as a film, a sheet, a foil, a net, a porous body, a foam, and a nonwoven fabric.

The positive electrode active material layer may be disposed on at least one surface of the positive electrode current collector. For example, the positive electrode active material layer may be disposed on one surface or both surfaces of the positive electrode current collector.

The positive electrode active material layer may include the above-mentioned positive electrode active material.

The positive electrode active material layer may optionally further include a binder and/or a conductive material together with the above-mentioned positive electrode active material.

The binder is a component that assists in the binding of the active material to the conductive material, etc. and the binding to the current collector, and may include, for example, at least one type selected from polyvinylidenefluoride, polyvinylalcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene terpolymer (EPDM), sulfonated EPDM, styrene-butadiene rubber and fluororubber, for example, polyvinylidenefluoride.

The binder may be included in an amount of about 1 wt% to 20 wt%, for example, about 1.2 wt% to 10 wt% in the positive electrode active material layer in terms of sufficiently securing a binding force between components such as the positive electrode active material.

The conductive material may be used to assist and improve the conductivity in the secondary battery, and is not particularly limited as long as it has conductivity without causing a chemical change. For example, the positive electrode conductive material may include at least one type selected from graphite such as natural graphite or artificial graphite; carbon black such as carbon black, acetylene black, Ketjen black, channel black, furnace black, lamp black, or thermal black; conductive fibers such as carbon fibers or metal fibers; conductive tubes such as carbon nanotubes; fluorocarbon; metal powder such as aluminum or nickel powder; conductive whiskers such as zinc oxide or potassium titanate; conductive metal oxides such as titanium oxide; and polyphenylene derivatives, and may include, for example, carbon nanotubes in terms of conductivity improvement.

The conductive material may be included in an amount of about 1 wt% to 20 wt%, for example, about 1.2 wt% to 10 wt% in the positive electrode active material layer in terms of sufficiently securing electrical conductivity.

The thickness of the positive electrode active material layer may be about 5 $\mu$m to 500 $\mu$m, for example, about 20 $\mu$m to 200 $\mu$m.

The positive electrode may be manufactured by coating a positive electrode slurry on the positive electrode current collector and then performing drying and roll-pressing. The positive electrode slurry includes the positive electrode active material and optionally the binder, the conductive material and a solvent for forming the positive electrode slurry.

**(2) Negative electrode**

The negative electrode 120 may face the positive electrode 110.

The negative electrode 120 may include a negative electrode active material.

The negative electrode active material is a material that allows lithium ions to be reversibly intercalated/deintercalated, and may include at least one type selected from a carbon-based active material, a (semi)metal-based active material, and lithium metals, or may include, for example, at least one type selected from a carbon-based active material and a (semi)metal-based active material.

The carbon-based active material may include at least one type selected from graphite, hard carbon, soft carbon, carbon black, graphene and fibrous carbon, or may include graphite according to one embodiment. The graphite may be, for example, at least one type of artificial graphite and natural graphite.

The average particle size ($D_{50}$) of the carbon-based active material may be about 10 $\mu$m to 30 $\mu$m, for example, about 15 $\mu$m to 25 $\mu$m in terms of reducing side reactions with the electrolyte while ensuring structural stability during charging/discharging.

According to one embodiment, the (semi)metal-based active material may include: at least one type of (semi) metal selected from Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one type of (semi)metal selected from Cu, Ni, Na, K, Rb, Cs, Fr, Be, Mg, Ca, Sr, Si, Sb, Pb, In, Zn, Ba, Ra, Ge, Al, V, Ti, and Sn; an oxide of at least one type of (semi)metal selected from Cu, Ni, Na, K, Rb, Cs, Fr, Be, Mg, Ca, Sr, Si, Sb, Pb, In, Zn, Ba, Ra, Ge, Al, V, Ti, and Sn; a lithium titanium oxide (LTO); or a lithium vanadium oxide.

According to one embodiment, the (semi)metal-based active material may include a silicon-based active material.

The silicon-based active material may include a compound represented by $SiO_x$ ($0 \leq x < 2$). $SiO_2$ does not react with lithium ions and thus cannot store lithium. Thus, x may satisfy the above range, and according to one embodiment, the silicon-based active material may be SiO.

The average particle size ($D_{50}$) of the silicon-based active material may be about 1 $\mu$m to 30 $\mu$m, for example, about 2 $\mu$m to 15 $\mu$m in terms of reducing side reactions with the electrolyte while ensuring structural stability during charging/discharging.

The negative electrode 120 may include a negative electrode current collector; and a negative electrode active material layer disposed on at least one surface of the negative electrode current collector. Here, the negative electrode active material may be included in the negative electrode active material layer.

The negative electrode current collector is not particularly limited as long as it has high conductivity without causing a chemical change in the corresponding battery. For example, copper, stainless steel, aluminum, nickel, titanium,

calcined carbon, copper or stainless steel surface-treated with carbon, nickel, titanium, silver, etc., and an aluminum-cadmium alloy may be used for the negative electrode current collector.

The negative electrode current collector may generally have a thickness of about 3 μm to 500 μm.

Like in the positive electrode current collector, in the negative electrode current collector, by forming fine irregularities on the surface, it is also possible to enhance the bonding strength of the negative electrode active material. For example, the negative electrode current collector may be used in various forms such as a film, a sheet, a foil, a net, a porous body, a foam, and a nonwoven fabric.

The negative electrode active material layer may be disposed on at least one surface of the negative electrode current collector, for example, on one surface or both surfaces of the negative electrode current collector.

The negative electrode active material may be included in an amount of about 60 wt% to 99 wt%, for example, about 75 wt% to 95 wt% in the negative electrode active material layer.

Other descriptions of the positive electrode active material have been described above, and thus will be omitted.

The negative electrode active material layer may further include a binder and/or a conductive material together with the negative electrode active material.

The binder is used to improve the adhesion between the negative electrode active material layer and the negative electrode current collector and to improve the performance of the battery. The binder may include, for example, at least one selected from polyvinylidenefluoride-hexafluoropropylene copolymer (PVDF-co-HFP), polyvinylidenefluoride (PVDF), polyacrylonitrile, polymethylmethacrylate, polyvinylalcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, and materials obtained by substituting their hydrogens with Li, Na or Ca, and also may include various copolymers thereof.

The binder may be included in an amount of about 0.5 wt% to 10 wt%, for example, about 1 wt% to 5 wt%, in the negative electrode active material layer.

The conductive material is not particularly limited as long as it has conductivity without causing a chemical change in the corresponding battery. For example, graphite such as natural graphite or artificial graphite; carbon black such as carbon black, acetylene black, Ketjen black, channel black, furnace black, lamp black, or thermal black; conductive fibers such as carbon fibers or metal fibers; conductive tubes such as carbon nanotubes; fluorocarbon; metal powder such as aluminum or nickel powder; conductive whiskers such as zinc oxide or potassium titanate; conductive metal oxides such as titanium oxide; and conductive materials such as polyphenylene derivatives may be used.

The conductive material may be included in an amount of about 0.5 wt% to 10 wt%, for example, about 1 wt% to 5 wt%, in the negative electrode active material layer.

The thickness of the negative electrode active material layer may be about 10 μm to 200 μm, for example, about 20 μm to 150 μm.

The negative electrode 120 may be manufactured by coating a negative electrode slurry on at least one surface of the negative electrode current collector and then performing drying and roll-pressing. The negative electrode slurry includes the negative electrode active material, the binder, the conductive material and/or a solvent for forming the negative electrode slurry.

The solvent for forming the negative electrode slurry may include at least one type selected from distilled water, N-methyl-2-pyrrolidone (NMP), ethanol, methanol, and isopropyl alcohol, for example, distilled water, in terms of facilitating dispersion of, for example, the negative electrode active material, the binder and/or the conductive material. The solid content of the negative electrode slurry may be about 30 wt% to 80 wt%, for example, 40 wt% to 70 wt%.

**(3) Separator**

The separator 130 may be interposed between the positive electrode and the negative electrode.

Also, as for the separator 130, general porous polymer films that have conventionally been used as separators, for example, porous polymer films made of polyolefin-based polymers such as ethylene homopolymer, propylene homopolymer, ethylene/butene copolymer, ethylene/hexene copolymer and ethylene/methacrylate copolymer, may be used singly or in a laminated manner, or a conventional porous fabric, for example, a nonwoven fabric made of high-melting-point glass fiber, polyethylene terephthalate fiber, etc. may be used, but the present invention is not limited thereto. Also, a coated separator containing ceramic components or polymer materials may also be used to secure heat resistance or mechanical strength, and may be optionally used in a single-layer or a multi-layer structure.

The external shape of the lithium secondary battery 100 of the present invention is not particularly limited, but may be a cylindrical shape using a can, a prismatic shape, a pouch shape or a coin shape.

Hereinafter, the present invention will be described through Examples. However, the following examples are merely examples for helping understanding of the present invention, and do not limit the scope of the present invention. It is obvious to those skilled in the art that various changes and modifications are possible within the scope of this description and the scope of the technical idea, and it is natural that these changes and modifications fall within the accompanying

claims.

## Examples and Comparative Examples

### Example 1

(Production of non-aqueous electrolyte)

As for an organic solvent, a mixture obtained by mixing ethylene carbonate (EC) and ethylmethyl carbonate (EMC) at a volume ratio of 20:80 was used.

$LiPF_6$ as a lithium salt, and the compound represented by Formula 1-1 and the compound represented by Formula 2 as additives were added to the organic solvent so as to produce a non-aqueous electrolyte.

$LiPF_6$ was included in the non-aqueous electrolyte at a molar concentration of 1.2 M.

The compound represented by Formula 1-1 was included in the non-aqueous electrolyte in an amount of 0.5 wt%, and the compound represented by Formula 2 was included in the non-aqueous electrolyte in an amount of 0.2 wt%.

(Manufacturing of lithium secondary battery)

A positive electrode active material ($Li[Ni_{0.6}Co_{0.1}Mn_{0.3}]O_2$): a conductive material (carbon black): and a binder (polyvinylidene fluoride) were added at a weight ratio of 97.6:0.8:1.6 to N-methyl-2-pyrrolidone (NMP) as a solvent so as to prepare a positive electrode slurry (solid content 60 wt%). The positive electrode slurry was applied and dried on one surface of a positive electrode current collector (Al thin film) with a thickness of 15 μm, and then roll-pressing was performed to form a positive electrode active material layer (thickness: 136.6 μm). This was used as a positive electrode. The positive electrode active material had a form of single particles or quasi-single particles.

A negative electrode active material (graphite): a conductive material (carbon black): and a binder (styrene-butadiene rubber and carboxymethyl cellulose) were added at a weight ratio of 96.75:0.50:2.75 to distilled water as a solvent so as to prepare a negative electrode slurry (solid content 60 wt%). The negative electrode slurry was applied and dried on one surface of a negative electrode current collector (Cu thin film) with a thickness of 6 μm, and then roll-pressing was performed to form a negative electrode active material layer (thickness: 179.8 μm). This was used as a negative electrode.

A polyethylene porous film separator was interposed between the produced positive electrode and the negative electrode in a dry room. Then, the prepared non-aqueous electrolyte was injected to manufacture a lithium secondary battery.

### Example 2

A non-aqueous electrolyte and a lithium secondary battery were manufactured in the same manner as in Example 1 except that in preparing the non-aqueous electrolyte, the compound represented by Formula 1-1 was included in the non-aqueous electrolyte in an amount of 1 wt% instead of 0.5 wt% relative to the total weight of the non-aqueous electrolyte.

### Example 3

A non-aqueous electrolyte and a lithium secondary battery were manufactured in the same manner as in Example 1 except that the compound represented by Formula 1-1 was not included in the non-aqueous electrolyte, and the compound represented by Formula 1-2 was included in the non-aqueous electrolyte in an amount of 0.5 wt% relative to the total weight of the non-aqueous electrolyte.

### Example 4

A non-aqueous electrolyte and a lithium secondary battery were manufactured in the same manner as in Example 1 except that the compound represented by Formula 1-1 was not included in the non-aqueous electrolyte, and the compound represented by Formula 1-3 was included in the non-aqueous electrolyte in an amount of 0.5 wt% relative to the total weight of the non-aqueous electrolyte.

### Comparative Example 1

A non-aqueous electrolyte and a lithium secondary battery were manufactured in the same manner as in

Example 1 except that the compound represented by Formula 1-1 was not added to the non-aqueous electrolyte.

**Comparative Example 2**

A non-aqueous electrolyte and a lithium secondary battery were manufactured in the same manner as in Example 1 except that the compound represented by Formula 1-1 was not added, and the following comparative compound A was included in the non-aqueous electrolyte in an amount of 0.5 wt% relative to the total weight of the non-aqueous electrolyte.

[Comparative compound A]

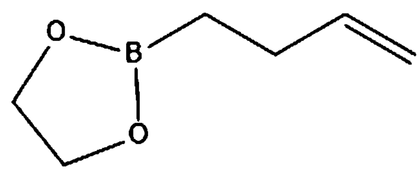

**Comparative Example 3**

A non-aqueous electrolyte and a lithium secondary battery were manufactured in the same manner as in Example 1 except that the compound represented by Formula 1-1 was not added, and the following comparative compound B was included in the non-aqueous electrolyte in an amount of 0.5 wt% relative to the total weight of the non-aqueous electrolyte.

[Comparative compound B]

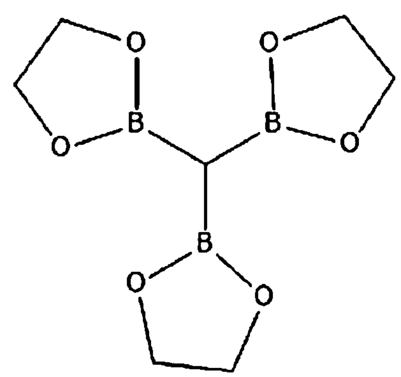

**Comparative Example 4**

A non-aqueous electrolyte and a lithium secondary battery were manufactured in the same manner as in Example 1 except that the compound represented by Formula 1-1 was not added, and the following comparative compound C was included in the non-aqueous electrolyte in an amount of 0.5 wt% relative to the total weight of the non-aqueous electrolyte.

[Comparative compound C]

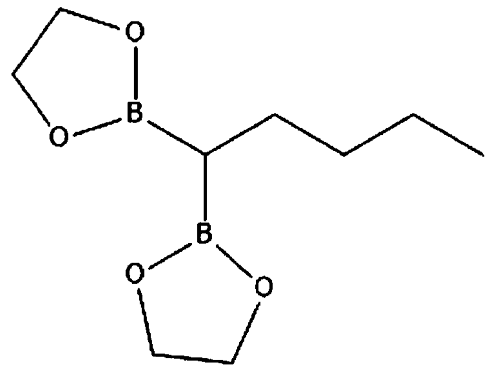

**Comparative Example 5**

A non-aqueous electrolyte and a lithium secondary battery were manufactured in the same manner as in Example 1 except that the compound represented by Formula 1-1 was not added, and the following comparative compound D was included in the non-aqueous electrolyte in an amount of 0.5 wt% relative to the total weight of the non-aqueous electrolyte.

[Comparative compound D]

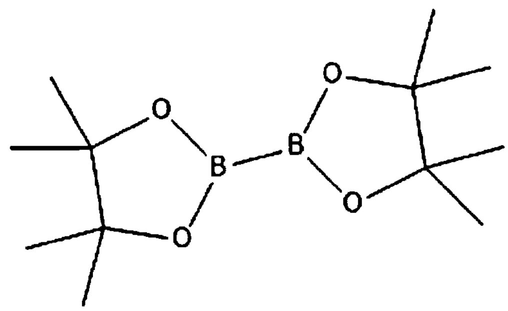

**Comparative Example 6**

A non-aqueous electrolyte and a lithium secondary battery were manufactured in the same manner as in Example 1 except that the compound represented by Formula 1-1 was not added, and the following comparative compound E was included in the non-aqueous electrolyte in an amount of 0.5 wt% relative to the total weight of the non-aqueous electrolyte.

[Comparative compound E]

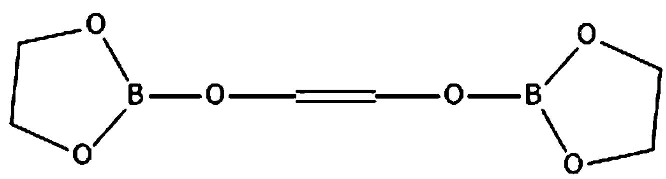

**Experimental Example**

**Experimental Example 1: High temperature cycle performance evaluation**

The above manufactured lithium secondary batteries of Examples 1 to 4 and Comparative Examples 1 to 6 were

charged to 4.4 V and 0.05 C at 45°C under conditions of CC/CV and 0.33 C by using an electrochemical charger/discharger, and then, were discharged to 2.5 V under conditions of CC and 0.33 C. This was set as one cycle and 200 charging/discharging cycles were performed.

(1) Capacity retention rate

The capacity retention rate was calculated by the following equation, and the results are noted in Table 1 below.

Capacity retention rate (%) = {(Discharge capacity after 200 cycles / Discharge capacity after one cycle)} × 100

Resistance increase rate

After one cycle of charging/discharging, the discharge capacity after one cycle was measured by using an electrochemical charger/discharger, and the SOC (state of charge) was adjusted to SOC of 50%. Then, a pulse of 2.5 C was applied for 10 sec, and the initial resistance was calculated through a difference between the voltage before the pulse application, and the voltage after the application.

After 200 cycles of charging/discharging, the resistance after 200 cycles was calculated in the same manner as above, and the resistance increase rate was calculated by using the following equation. The results are noted in Table 1 below.

Resistance increase rate (%) = (Resistance after 200 cycles - initial resistance)/initial resistance × 100

[Table 1]

| | Capacity retention rate (%) | Resistance increase rate (%) |
|---|---|---|
| Example 1 | 93 | 18 |
| Example 2 | 90 | 20 |
| Example 3 | 92 | 20 |
| Example 4 | 89 | 17 |
| Comparative Example 1 | 74 | 33 |
| Comparative Example 2 | 84 | 23 |
| Comparative Example 3 | 76 | 31 |
| Comparative Example 4 | 83 | 24 |
| Comparative Example 5 | 81 | 21 |
| Comparative Example 6 | 86 | 27 |

Referring to Table 1, it can be found that as compared to Comparative Examples 1 to 6, the case of Examples 1 to 4 using the non-aqueous electrolyte according to the present invention exhibits a remarkably excellent level of high-temperature cycle charging/discharging performance.

**Experimental Example 2: High temperature storage performance evaluation**

The above manufactured lithium secondary batteries of Examples 1 to 4 and Comparative Examples 1 to 6 were charged to 4.4 V and 0.05 C at 25°C under conditions of CC/CV and 0.33 C by using an electrochemical charger/discharger, and then were discharged to 2.5 V under conditions of CC and 0.33 C. After this initial charging/discharging was performed, these batteries were charged to 4.4 V and 0.05 C under conditions of CC/CV and 0.33 C at 25°C, and then were stored at 60°C for 8 weeks.

(1) Capacity retention rate

After 8 weeks of storage, the lithium secondary batteries were charged to 4.4 V and 0.05 C under conditions of CC/CV and 0.33 C at 25°C by using an electrochemical charger/discharger, and were discharged to 2.5 V at CC, and 0.33

C. Then, the capacity during discharging was measured.

The capacity retention rate was evaluated by the following equation, and the results are noted in Table 2 below.

Capacity retention rate (%) = (discharge capacity after 8 weeks of storage /initial discharge capacity) × 100

Resistance increase rate

After the initial charging/discharging, the capacity was checked at room temperature, and then the batteries were charged to SOC 50% based on the discharge capacity, and discharged for 10 sec with a current of 2.5 C. The resistance was measured by the difference in voltage drop at this time and was set as the initial resistance. After 8 weeks of storage at 60°C, the resistance was measured by the same method, and was set as a final resistance. Then, the resistance increase rate was calculated through the following equation. The results are noted in Table 2 below.

Resistance increase rate (%) = (final resistance - initial resistance) / (initial resistance) × 100

[Table 2]

| | Capacity retention rate (%) | Resistance increase rate (%) |
|---|---|---|
| Example 1 | 92 | 19 |
| Example 2 | 89 | 21 |
| Example 3 | 89 | 22 |
| Example 4 | 90 | 17 |
| Comparative Example 1 | 73 | 36 |
| Comparative Example 2 | 84 | 26 |
| Comparative Example 3 | 78 | 32 |
| Comparative Example 4 | 80 | 26 |
| Comparative Example 5 | 83 | 24 |
| Comparative Example 6 | 84 | 28 |

Referring to Table 2, it can be found that as compared to Comparative Examples 1 to 6, the case of Examples 1 to 4 using the non-aqueous electrolyte according to the present invention exhibits a remarkably excellent level of high-temperature storage characteristics.

FIG. 2 is a view for explaining a vehicle 300 including a battery pack 200 composed of the lithium secondary batteries 100 of FIG. 1.

Referring to FIG. 2, the vehicle 300 according to one embodiment of the present invention may be, for example, an electric vehicle, a hybrid vehicle, or a plug-in hybrid vehicle, and includes the battery pack 200 composed of the lithium secondary batteries 100 according to one embodiment of the present invention. The vehicle 300 includes a four-wheeled automobile and a two-wheeled automobile. The vehicle 300 operates when power is supplied from the battery pack 200 according to one embodiment of the present invention.

From the foregoing, it will be appreciated that various embodiments of the present invention have been described herein for purposes of illustration, and that various modifications may be made without departing from the scope and spirit of the present invention. Accordingly, the various embodiments disclosed herein are not intended to be limiting, with the true scope and spirit being indicated by the following claims.

## Claims

**1.** A non-aqueous electrolyte comprising:

a lithium salt;
an organic solvent; and
an additive,

wherein the additive includes a compound represented by Formula 1:

[Formula 1]

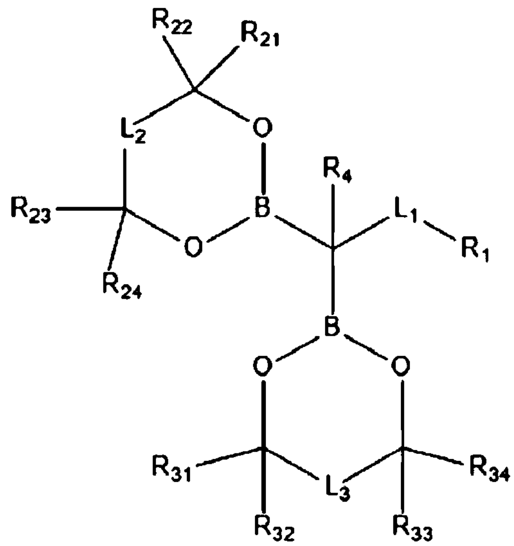

wherein in Formula 1, $L_1$ is an alkylene group having 1 to 10 carbon atoms, $L_2$ is a direct bond or *-C($R_{25}$)($R_{26}$)-*, and $L_3$ is a direct bond or *-C($R_{35}$)($R_{36}$)-*,
$R_1$ is an unsaturated hydrocarbon group having 2 to 10 carbon atoms, and
$R_{21}$, $R_{22}$, $R_{23}$, $R_{24}$, $R_{25}$, $R_{26}$, $R_{31}$, $R_{32}$, $R_{33}$, $R_{34}$, $R_{35}$, $R_{36}$, and $R_4$ are each independently hydrogen or an alkyl group having 1 to 5 carbon atoms, and * is a bonding site.

**2.** The non-aqueous electrolyte according to claim 1, wherein $R_1$ is a substituent selected from Formulas 1-a and 1-b:

[Formula 1-a]

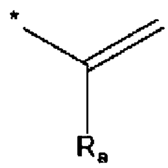

[Formula 1-b]

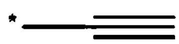

wherein in Formula 1-a, $R_a$ is hydrogen or an alkyl group having 1 to 5 carbon atoms, and * is a bonding site.

**3.** The non-aqueous electrolyte according to claim 1, wherein the compound represented by Formula 1 includes at least one type selected from compounds represented by Formulas 1-1 to 1-8:

[Formula 1-1]

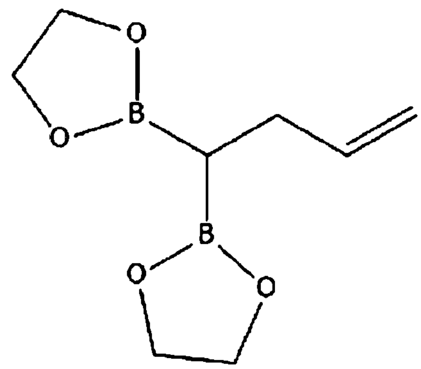

[Formula 1-2]

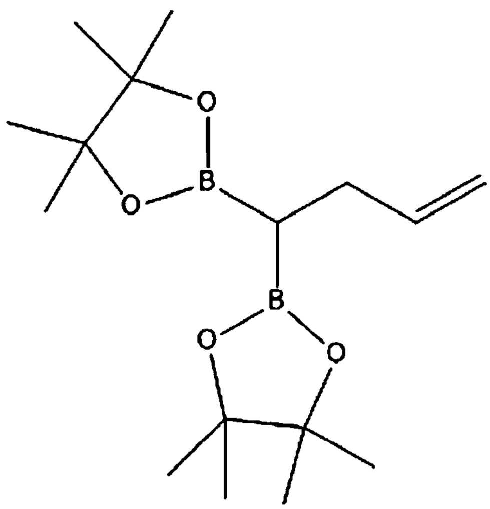

[Formula 1-3]

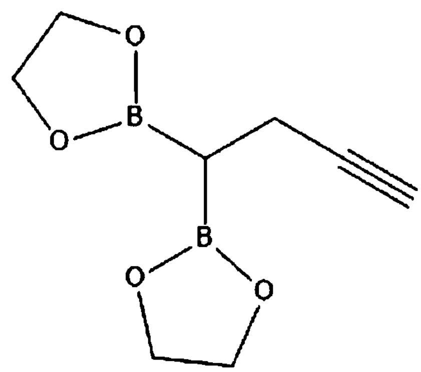

[Formula 1-4]

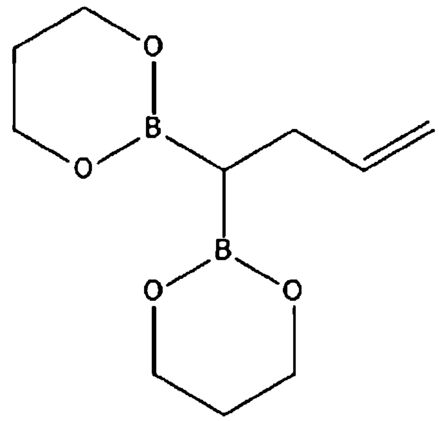

[Formula 1-5]

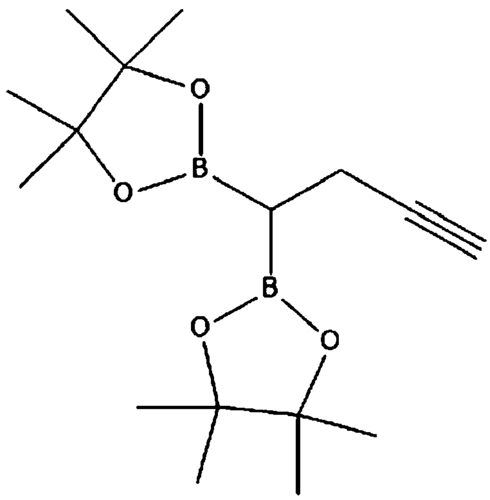

[Formula 1-6]

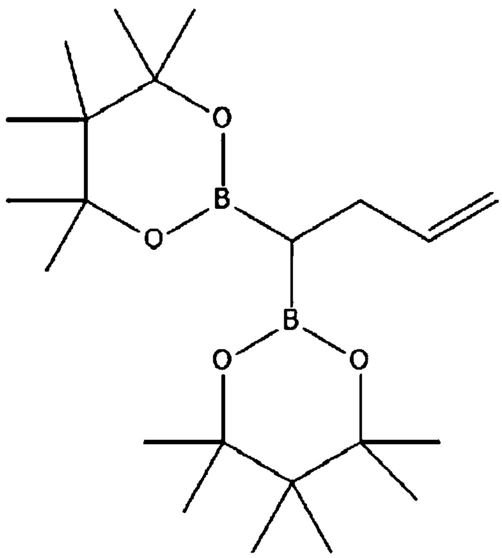

[Formula 1-7]

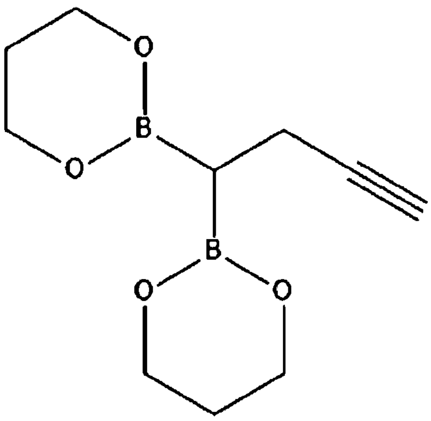

[Formula 1-8]

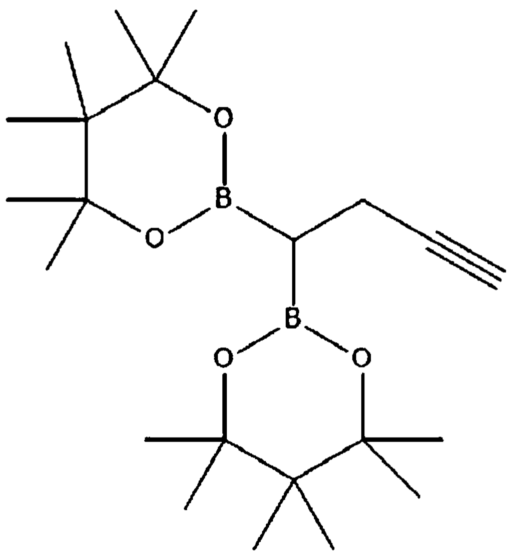

**4.** The non-aqueous electrolyte according to claim 1, wherein the additive includes the compound represented by Formula 1 in an amount of 0.01 wt% to 10 wt% relative to a weight of the non-aqueous electrolyte.

**5.** The non-aqueous electrolyte according to claim 1, wherein the additive further includes at least one type of additional additives selected from coumarine, fluoroethylene carbonate, propane sultone, propene sultone, succinonitrile, adiponitrile, ethylene sulfate, lithium difluoro phosphate (LiDFP), lithium tetrafluoroborate ($LiBF_4$), lithium bis-(oxalate)borate (LiBOB), 3-trimethoxysilanyl-propyl-N-aniline (TMSPa), tris(trimethylsilyl) phosphite (TMSPi), a compound represented by Formula 2 and a compound represented by Formula 3:

[Formula 2]

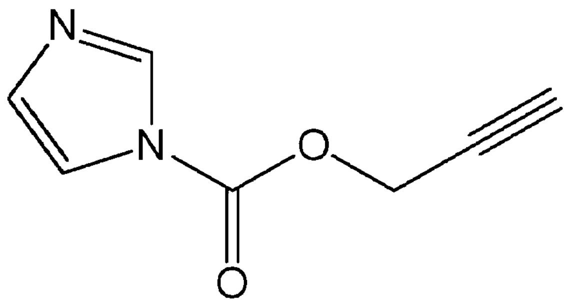

[Formula 3]

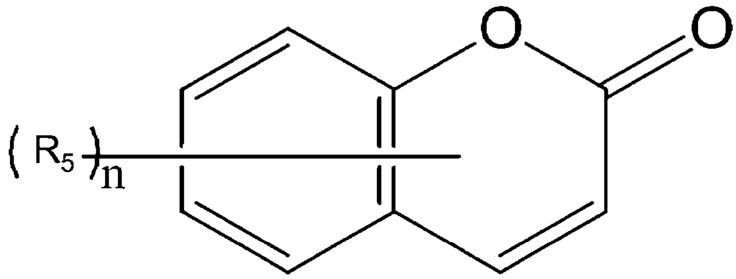

wherein in Formula 3,
$R_5$ includes halogen, a nitrile group, a propargyl group, an ester group, an ether group, a ketone group, a carboxy group, an alkyl group, an alkenyl group, a substituted or unsubstituted alkynyl group, an alkoxy group, a boron group, a borate group, an isocyanate group, an isothiocyanate group, a silyl group, a siloxane group, a sulfone group, a sulfonate group, a sulfate group or a combination of two or more of these, and n is an integer selected from 0 to 6.

**6.** The non-aqueous electrolyte according to claim 1, wherein the lithium salt includes at least one type selected from LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB($LiB(C_2O_4)_2$), $LiCF_3SO_3$, LiFSI($LiN(SO_2F)_2$), $LiCH_3SO_3$, $LiCF_3CO_2$, $LiCH_3CO_2$ and LiBETI($LiN(SO_2CF_2CF_3)_2$).

**7.** The non-aqueous electrolyte according to claim 1, wherein the non-aqueous electrolyte includes the lithium salt at a molar concentration of 0.5 M to 5.0 M.

**8.** The non-aqueous electrolyte according to claim 1, wherein the organic solvent includes at least one selected from a

cyclic carbonate-based organic solvent, a linear carbonate-based organic solvent, a linear ester-based organic solvent and a cyclic ester-based organic solvent.

**9.** A lithium secondary battery comprising:

a positive electrode;
a negative electrode facing the positive electrode;
a separator interposed between the positive electrode and the negative electrode; and
the non-aqueous electrolyte according to claim 1.

**10.** The lithium secondary battery according to claim 9, wherein the positive electrode includes a positive electrode active material, and

the positive electrode active material contains a lithium transition metal oxide represented by Formula A:

[Formula A] $Li_{1+x}[Ni_aCo_bMn_cM_d]O_2$

wherein in Formula A, $0 \le x \le 0.5$, $a+b+c+d = 1$, $0.5 \le a \le 0.7$, $0 \le b \le 0.15$, $c=1-a-b-d$, $0 \le d \le 0.1$, $0 \le b/a \le 0.2$, $1 \le a/c \le 3$, and M is at least one type selected from W, Cu, Fe, V, Cr, Ti, Zr, Zn, Al, In, Ta, Y, La, Sr, Ga, Sc, Gd, Sm, Ca, Ce, Nb, Mg, B and Mo.

[FIG. 1]

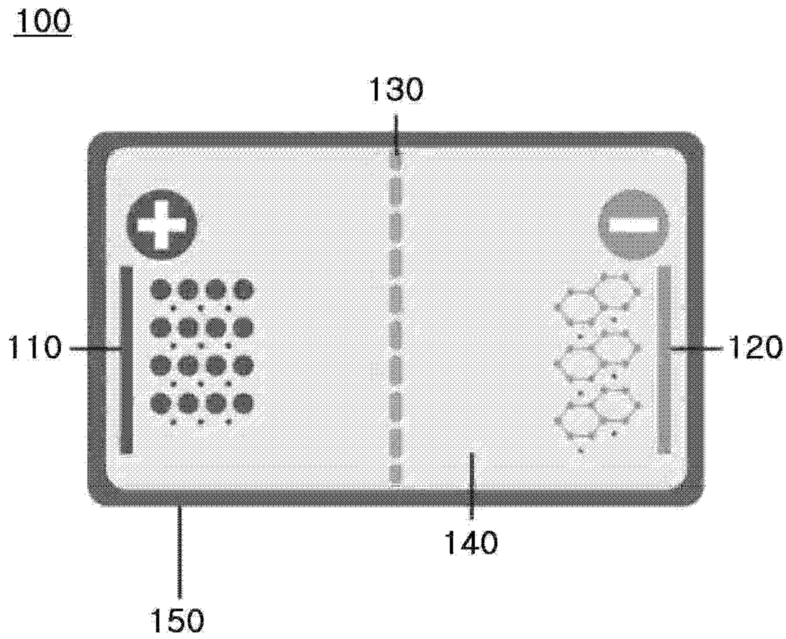


[FIG. 2]

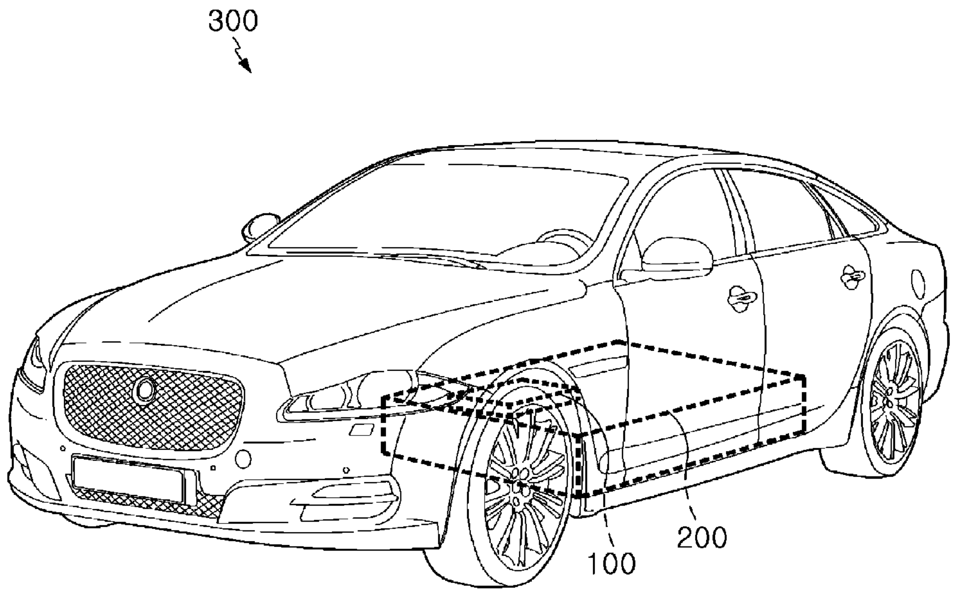

## INTERNATIONAL SEARCH REPORT

International application No.
**PCT/KR2025/007623**

**A. CLASSIFICATION OF SUBJECT MATTER**

**H01M 10/0567**(2010.01)i; **H01M 10/42**(2006.01)i; **H01M 10/052**(2010.01)i; **H01M 4/525**(2010.01)i; **H01M 4/505**(2010.01)i

According to International Patent Classification (IPC) or to both national classification and IPC

**B. FIELDS SEARCHED**

Minimum documentation searched (classification system followed by classification symbols)

H01M 10/0567(2010.01); C07F 7/08(2006.01); H01M 10/052(2010.01); H01M 10/26(2006.01); H01M 4/62(2006.01); H01M 8/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, CAplus) & keywords: 비수전해질(non-aqueous electrolyte), 리튬이차전지(lithium secondary battery), 첨가제(additives), 양극(cathode), 음극(anode)

**C. DOCUMENTS CONSIDERED TO BE RELEVANT**

| Category* | Citation of document, with indication, where appropriate, of the relevant passages | Relevant to claim No. |
|---|---|---|
| X | JP 2010-251313 A (SANYO ELECTRIC CO., LTD. et al.) 04 November 2010 (2010-11-04) claim 1; paragraphs [0025]-[0027], [0031], [0032], [0044], [0053], [0054], [0058], [0060], [0061], [0066]-[0069] | 1-9 |
| Y | | 10 |
| Y | KR 10-2015-0072325 A (SK INNOVATION CO., LTD.) 29 June 2015 (2015-06-29) paragraphs [0131]-[0133] | 10 |
| A | US 2013-0059210 A1 (YU, J.-Y. et al.) 07 March 2013 (2013-03-07) claims 1-18 | 1-10 |
| A | US 2011-0123895 A1 (ARIMURA, T.) 26 May 2011 (2011-05-26) claims 1, 7 | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 September 2025** | **15 September 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2025/007623**

**C. DOCUMENTS CONSIDERED TO BE RELEVANT**

| Category* | Citation of document, with indication, where appropriate, of the relevant passages | Relevant to claim No. |
|---|---|---|
| A | CN 114621278 A (GUANGZHOU INSTITUTE OF ENERGY CONVERSION, CHINESE ACADEMY OF SCIENCES) 14 June 2022 (2022-06-14)<br>claims 1-4 | 1-10 |

Form PCT/ISA/210 (second sheet) (July 2022)

**INTERNATIONAL SEARCH REPORT**
**Information on patent family members**

International application No.
**PCT/KR2025/007623**

| Patent document cited in search report | | | Publication date (day/month/year) | Patent family member(s) | | | Publication date (day/month/year) |
|---|---|---|---|---|---|---|---|
| JP | 2010-251313 | A | 04 November 2010 | JP | 5364890 | B2 | 11 December 2013 |
| KR | 10-2015-0072325 | A | 29 June 2015 | KR | 10-2308599 | B1 | 06 October 2021 |
| US | 2013-0059210 | A1 | 07 March 2013 | KR | 10-2013-0026282 | A | 13 March 2013 |
| US | 2011-0123895 | A1 | 26 May 2011 | JP | 2011-113740 | A | 09 June 2011 |
| | | | | JP | 4691189 | B1 | 01 June 2011 |
| | | | | US | 8034507 | B2 | 11 October 2011 |
| CN | 114621278 | A | 14 June 2022 | CN | 114621278 | B | 31 October 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240073345